# EUROPÄISCHE PATENTSCHRIFT

(11) **EP 2 557 295 B1**
(45) Veröffentlichungstag und Bekanntmachung des Hinweises auf die Patenterteilung: **25.06.2014**
(21) Anmeldenummer: 12178578.6
(22) Anmeldetag: 31.07.2012
(51) Int. Cl.: F02B 67/06, F16H 7/12

(54) **Spannvorrichtung für einen Riementrieb und Elektromaschine mit einer derartigen Spannvorrichtung**
Tensioning device for a belt drive and electric machine with such a tensioning device
Dispositif de serrage pour une courroie d'entraînement et machine électrique équipée d'un dispositif de serrage de ce type

(30) Priorität: 12.08.2011 DE 102011080909; 08.09.2011 DE 102011082330
(43) Veröffentlichungstag der Anmeldung: 13.02.2013
(73) Patentinhaber: Schaeffler Technologies GmbH & Co. KG, 91074 Herzogenaurach (DE)
(72) Erfinder: Wolf, Benjamin, 91088 Bubenreuth (DE); Rauch, Martin, 96049 Bamberg (DE); Hauck, Christian, 90518 Altdorf (DE); Hartmann, Bernd, 91085 Weisendorf (DE)

(56) Entgegenhaltungen:
- EP-A2- 2 128 489
- DE-A1- 10 044 645
- DE-A1- 19 926 615

## Beschreibung

Die Erfindung betrifft eine Spannvorrichtung für einen Riementrieb, der einen endlos umlaufenden Riemen, eine Elektromaschine mit einem Maschinengehäuse und einem Antriebsrad und zumindest ein weiteres Triebrad aufweist, das über den Riemen mit dem Antriebsrad in Antriebsverbindung steht, wobei die Spannvorrichtung folgendes umfasst:
- ein Spannergehäuse, das mittels einer Gleitlagerung um die Achse des Antriebsrads verschwenkbar auf dem Maschinengehäuse gelagert ist,
- zwei Spannrollen, die den Riemen in dessen Umlaufrichtung vor und hinter dem Antriebsrad mit Vorspannkraft beaufschlagen,
- ein die Vorspannkraft erzeugendes Federmittel
- und einen gegen die Kraft des Federmittels beweglich im Spannergehäuse gelagerten Spannarm,
wobei eine der Spannrollen auf dem Spannarm gelagert ist und die andere Spannrolle ortsfest auf dem Spannergehäuse gelagert ist.

Die Erfindung betrifft außerdem eine Elektromaschine mit einer derartigen Spannvorrichtung.

### Hintergrund der Erfindung

Bei Riementrieben mit wechselweise Drehmoment aufnehmenden und abgebenden Triebrädern und einem dementsprechenden Wechsel von Zugtrum und Leertrum erfordert das Spannen des Leertrums eine Spannvorrichtung mit zwei Spannrollen, die das Zugmittel vor und hinter dem wechselweise antreibenden und angetriebenen Antriebsrad vorspannen. Es handelt sich typischer- aber nicht notwendigerweise um den Riementrieb einer Brennkraftmaschine mit einer Elektromaschine in Form eines Startergenerators, der nicht nur zwecks Stromerzeugung von der Brennkraftmaschine angetrieben wird, sondern auch die Brennkraftmaschine antreibt, um diese zu starten.

Bekannte Spannvorrichtungen, wie sie beispielsweise in der gattungsgemäßen DE 199 26 615 A1, DE 10 2008 025 552 A1 und DE 10 2006 019 877 A1 vorgeschlagen sind, weisen jeweils ein am Startergenerator befestigtes Spannergehäuse und zwei beweglich darin gelagerte Spannarme auf, deren Spannrollen durch ein dazwischen angeordnetes Federmittel aufeinander zu kraftbeaufschlagt sind, um den Riemen zu spannen.

Eine Spannvorrichtung der eingangs genannten Art, d.h. mit lediglich einem beweglich im Spannergehäuse gelagerten Spannarm einerseits und einer gehäusefesten Spannrolle andererseits, und eine Elektromaschine mit einer derartigen Spannvorrichtung sind aus der nicht vorveröffentlichten DE 10 2010 048 206 A1 bekannt.

### Aufgabe der Erfindung

Ausgehend hiervon liegt der vorliegenden Erfindung die Aufgabe zugrunde, eine Spannvorrichtung der eingangs genannten Art und eine Elektromaschine mit einer derartigen Spannvorrichtung hinsichtlich der Gleitlagerung auf dem Maschinengehäuse konstruktiv weiterzubilden.

### Zusammenfassung der Erfindung

Die erfindungsgemäße Lösung ist durch die Merkmale des Anspruchs 1, characterisiert.

Das Spannergehäuse kann mit einem Lagerring versehen sein, auf dessen Innenmantel und auf dessen Stirnseiten die radiale bzw. die axialen Gleitlagerflächen des Spannergehäuses verlaufen. Vorzugsweise sind die radiale und die axialen Gleitlagerflächen des Spannergehäuses durch Gleitbeläge gebildet, die am Innenmantel bzw. auf den Stirnseiten des Lagerrings gegen Verdrehen gesichert angeordnet sind.

Die Gleitbeläge können jeweils aus kreisbogenförmigen Belagsegmenten zusammengesetzt sein. Diese sind zweckmäßigerweise mit Vorsprüngen versehen, die zwecks formschlüssig wirkender Verdrehsicherung in innenumfangsseitigen bzw. stirnseitigen Ausnehmungen im Lagerring eingesetzt sind.

Die (kreisrunden) Gleitbeläge oder gegebenenfalls die Belagsegmente können in einer alternativen Ausgestaltung auch ausschließlich stoffschlüssig auf dem Lagerring befestigt, insbesondere verklebt sein.

Die Lösung der Aufgabe besteht bezüglich der Elektromaschine darin, dass die Gleitlagerflächen des Maschinengehäuses einen in dessen Umfangsrichtung verlaufenden Kanal bilden, der einen im wesentlichen U-förmigen, radial auswärts geöffneten Querschnitt aufweist und in den sich der Lagerring radial einwärts erstreckt.

Dabei kann eine der axialen Gleitlagerflächen des Maschinengehäuses unmittelbar auf dem Maschinengehäuse ausgebildet sein, während dessen andere axiale Gleitlagerfläche auf einer mit dem Maschinengehäuse verschraubten Lagerscheibe ausgebildet ist, die auf der dem Maschinengehäuse abgewandten Stirnseite des Lagerrings angeordnet ist. Diese konstruktive Ausgestaltung führt zu einer besonders kompakten, d.h. Bauraum sparenden Lagerung der Spannvorrichtung am Maschinengehäuse.

Weiterhin soll die ortsfest auf dem Spannergehäuse gelagerte Spannrolle in Umlaufrichtung des Riemens vor dem Antriebsrad angeordnet sein. Bei dieser Anordnung der Spannrollen ist die mit auffälliger Akustik und erhöhtem Verschleiß einhergehende Kippgefahr des auf dem Antriebsrad der Elektromaschine auflaufenden Riemenabschnitts deutlich kleiner als bei umgekehrter Spannrollenanordnung, da bei der gehäusefesten Spannrolle das die Riemenverkippung begünstigende Lagerspiel zwischen Spannarm und Spannrolle nicht existent ist.

### Kurze Beschreibung der Zeichnungen

Ein Ausführungsbeispiel der Erfindung ist in den nachfolgend beschriebenen Zeichnungen dargestellt. Es zeigen:
- Figur 1: einen erfindungsgemäße Elektromaschine mit darauf montierter Spannvorrichtung in perspektivischer Gesamtdarstellung;
- Figur 2: die Spannvorrichtung gemäß Figur 1 in explodierter Darstellung;
- Figur 3: die Spannvorrichtung gemäß Figur 1 in Längsschnittdarstellung;
- Figur 4: ein Spannergehäuseteil der Spannvorrichtung gemäß Figur 1 in einer ersten perspektivischen Einzelteildarstellung (Rückseite);
- Figur 5: ein Belagsegment zur Bildung der rückseitigen axialen Gleitlagerfläche des Spannergehäuses;
- Figur 6: ein Belagsegment zur Bildung der radialen Gleitlagerfläche des Spannergehäuses;
- Figur 7: das Spannergehäuseteil der Spannvorrichtung gemäß den Figuren 1 und 4 in einer zweiten perspektivischen Einzelteildarstellung (Frontseite) und
- Figur 8: ein Belagsegment zur Bildung der frontseitigen axialen Gleitlagerfläche des Spannergehäuses.

### Ausführliche Beschreibung der Zeichnungen

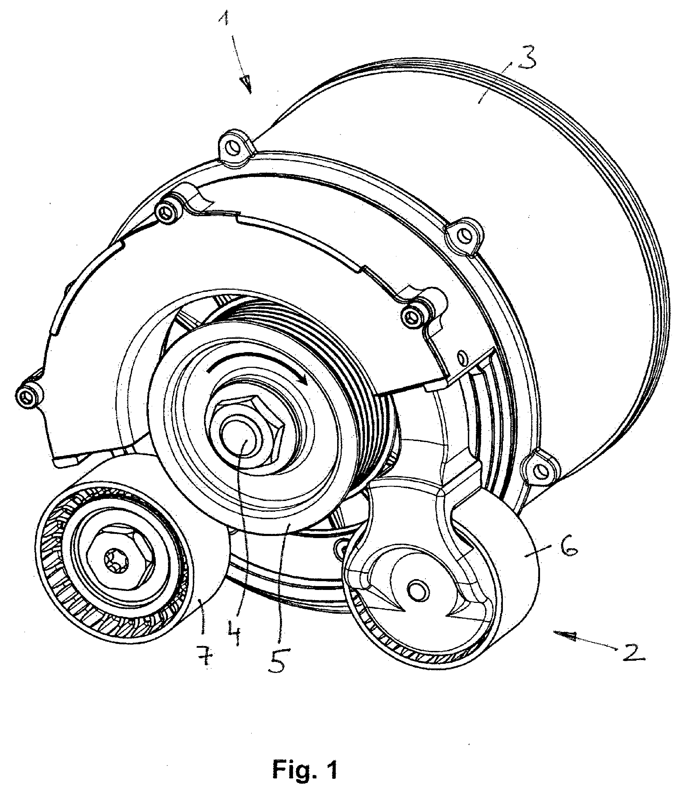

Bei der in Figur 1 dargestellten Elektromaschine 1 handelt es sich um einen Startergenerator eines Nebenaggregate-Riementriebs einer Brennkraftmaschine, wobei der Startergenerator 1 mit einer Spannvorrichtung 2 für einen (nicht dargestellten) endlos umlaufenden Poly-V-Riemen zu einer Baueinheit zusammengefasst ist. Der Startergenerator 1 umfasst ein generell zylindrisches Maschinengehäuse 3 und ein auf einer Achse 4 verschraubtes Antriebsrad 5, das über den Riemen zumindest mit dem (ebenfalls nicht dargestellten) Kurbelwellen-Triebrad der Brennkraftmaschine in Antriebsverbindung steht.

Das Kurbelwellen-Triebrad wird auf an sich bekannte Weise zum Starten der Brennkraftmaschine vom Antriebsrad 5 des Startergenerators 1 angetrieben, um dann bei gestarteter Brennkraftmaschine das Antriebsrad 5 zur Stromerzeugung anzutreiben. Das dementsprechend wechselweise Drehmoment abgebende bzw. Drehmoment aufnehmende Antriebsrad 5 bewirkt einen dazu synchronen Wechsel von Zugtrum und Leertrum im Riementrieb, der die auf dem Antriebsrad 5 eingezeichnete Umlaufrichtung des Riemens aufweist. Im Startbetrieb der Brennkraftmaschine ist dasjenige Riementrum das Zugtrum, das in Umlaufrichtung vor dem antreibenden Antriebsrad 5 verläuft, und dasjenige Riementrum das Leertrum, das in Umlaufrichtung hinter dem Antriebsrad 5 verläuft. Umgekehrt ist im Generatorbetrieb dasjenige Riementrum das Leertrum, das in Umlaufrichtung vor dem dann angetriebenen Antriebsrad 5 verläuft, und dasjenige Riementrum das Zugtrum, das in Umlaufrichtung hinter dem Antriebsrad 5 verläuft.

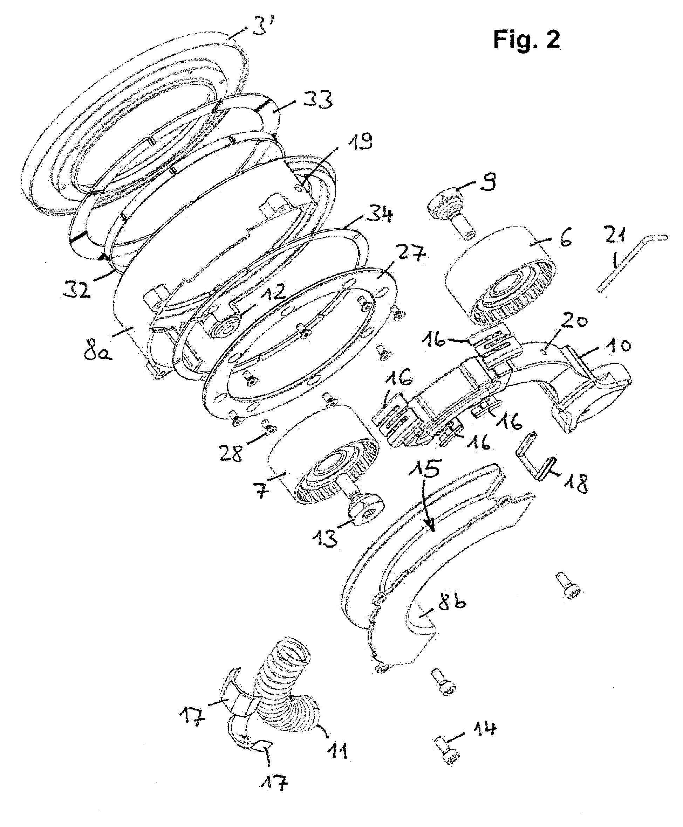

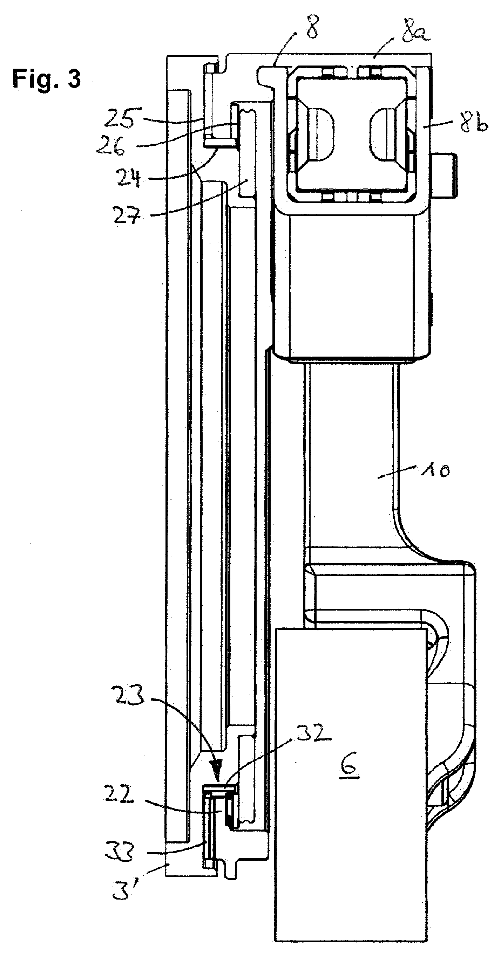

Die Spannvorrichtung 2 ist frontseitig auf dem Maschinengehäuse 3 montiert und umfasst zwei Spannrollen 6 und 7, die den Riemen in dessen Umlaufrichtung vor und hinter dem Antriebsrad 5 mit Vorspannkraft beaufschlagen, um die sich abwechselnden Leertrums des Riementriebs zu spannen. Der konstruktive Aufbau der Spannvorrichtung 2 ist nachfolgend anhand der Figuren 2 und 3 erläutert. Das Maschinengehäuse 3 ist dort durch die auf der Rückseite der Spannvorrichtung 2 verlaufende Maschinengehäusescheibe 3' symbolisiert, die in Figur 1 als solche nicht existent ist, sondern einstückig am Maschinengehäuse 3 ausgebildet ist.

Die Spannvorrichtung 2 umfasst ein Spannergehäuse 8, das um die Achse 4 des Antriebsrads 5 verschwenkbar auf der Frontseite des Maschinengehäuses 3 gelagert ist. Die in Umlaufrichtung des Riemens hinter dem Antriebsrad 5 angeordnete Spannrolle 6 ist mittels einer Achsschraube 9 auf einem Spannarm 10 gelagert, dessen kreisbogenförmiger Armabschnitt gegen ein die Vorspannkraft erzeugendes Federmittel in Form einer Bogenfeder 11 um die Achse 4 des Antriebsrads 5 beweglich im Spannergehäuse 8 gelagert ist. Demgegenüber ist die andere Spannrolle 7 ortsfest auf dem Spannergehäuse 8 gelagert. Das Spannergehäuseteil 8a ist hierzu mit einem Zapfen 12 versehen, in dem die Achsschraube 13 der anderen Spannrolle 7 eingeschraubt ist.

Die schwenkbare Lagerung der gesamten Spannvorrichtung 2 ermöglicht es, dass bei einem Betriebswechsel des Startergenerators 1 und einer entsprechenden Vertauschung von Zugtrum mit Leertrum im Riementrieb das Spannergehäuse 8 mit den Spannrollen 6, 7 um die Achse 4 des Antriebsrads 5 verschwenkt. Wenn also beispielsweise der Startergenerator 1 vom Starterbetrieb in den Generatorbetrieb wechselt, dann wechselt das Riementrum seitens der gehäuseseitig beweglichen Spannrolle 6 von Leertrum auf Zugtrum und seitens der gehäuseseitig ortsfesten Spannrolle 7 von Zugtrum auf Leertrum. Folglich führt dieser Betriebswechsel zu einer Verschwenkung der Spannvorrichtung 2 aus dem dann aktuellen Zugtrum seitens der Spannrolle 6 heraus in das dann aktuelle Leertrum seitens der Spannrolle 7 hinein, d.h. bei der eingezeichneten Umlaufrichtung zu einer Verschwenkung entgegen der Umlaufrichtung. Dabei wird die Vorspannkraft im Riementrieb stets durch die Bogenfeder 11 aufrecht erhalten, die den Spannarm 10 aus dem Spannergehäuse 8 heraus mit Druckkraft beaufschlagt.

Das Spannergehäuse 8 setzt sich aus dem Spannergehäuseteil 8a und einem daran mittels der Verschraubung 14 (drei Schrauben in Figur 2) befestigten weiteren Spannergehäuseteil 8b zusammen, das gemeinsam mit dem Spannergehäuseteil 8a einen kreisbogenförmigen und im Querschnitt rechteckigen Aufnahmeraum 15 für den Spannarm 10 und die Bogenfeder 11 begrenzt. Die Lagerung und Schwingungsdämpfung des Spannarms 10 und der Bogenfeder 11 im Spannergehäuse 8 erfolgt mittels Gleitlagerschalen 16 bzw. 17. Das weitere Spannergehäuseteil 8b ist mit einer Dichtleiste 18 versehen, die den Aufnahmeraum 15 vor eindringenden Schmutzpartikeln schützt. Der durch die Gehäusebohrung 19 in die Spannarmbohrung 20 eingesetzte Sicherungsstift 21 dient als Montagesicherung, die den Spannarm 10 in einer vorgespannten Transportstellung fixiert, bevor der Startergenerator 1 mit Spannvorrichtung 2 im Riementrieb eingebaut ist.

Die schwenkbare Lagerung des Spannergehäuses 8 auf dem Startergenerator 1 erfolgt mittels einer Gleitlagerung, die das Spannergehäuse 8 mit radialen Gleitlagerflächen in radialer Richtung und mit axialen Gleitlagerflächen in beidseitig axialer Richtung auf der Frontseite des Maschinengehäuses 3 lagert. Wie es insbesondere in der Längsschnittdarstellung gemäß Figur 3 gut erkennbar ist, ist der Spannergehäuseteil 8a mit einem Lagerring 22 versehen, der sich radial einwärts in einen in Umfangsrichtung des Maschinengehäuses 3 verlaufenden Kanal 23 erstreckt. Dieser Kanal 23 ist durch die radiale und die axialen Gleitlagerflächen 24 bzw. 25 und 26 des Maschinengehäuses 3 gebildet und weist einen im wesentlichen U-förmigen, radial auswärts geöffneten Querschnitt auf. Eine axiale Gleitlagerfläche 25 des Maschinengehäuses 3 ist unmittelbar auf dessen Frontseite ausgebildet, und die andere axiale Gleitlagerfläche 26 ist auf einer separaten Lagerscheibe 27 ausgebildet. Die Lagerscheibe 27 ist auf der dem Maschinengehäuse 3 abgewandten Stirnseite des Lagerrings 22 angeordnet und am Maschinengehäuse 3 mittels der Schraubverbindung 28 befestigt (acht Schrauben in Figur 2).

Durch den Axialversatz der Gleitlagerung zur Riemenebene - diese verläuft etwa mittig durch die Spannrolle 6 - ist die Gleitlagerung mit einem aus den schwankenden Riemenkräften resultierenden Kippmoment belastet, das die axialen Gleitlagerflächen mit entsprechend schwankenden Reaktions-Querkräften belastet. Folglich geht die Gleitlagerung auch mit einer lastabhängigen Dämpfung der Schwenkbewegung des Spannergehäuses 8 einher.

Aus einer Zusammenschau der Figuren 1 und 3 wird ersichtlich, dass die Gleitlagerung und die Lagerscheibe 27 radial vollständig außerhalb des Antriebsrads 5 verlaufen oder dass - mit anderen Worten - der kleinere Innendurchmesser von beiden größer als der Außendurchmesser des Antriebsrads 5 ist. Diese Bauteildimensionierung ermöglicht es, die Spannvorrichtung 2 auf das Gehäuse 3 des mensionierung ermöglicht es, die Spannvorrichtung 2 auf das Gehäuse 3 des Startergenerators 1 bei bereits angeschraubtem Antriebsrad 5 zu montieren.

Wie es aus den Figuren 2 bis 8 deutlich wird, sind die radiale und die axialen Gleitlagerflächen 29 bzw. 30 und 31 des Spannergehäuses 8 jeweils durch Gleitbeläge 32 bzw. 33 und 34 gebildet, die auf dem Innenmantel 35 bzw. auf den Stirnseiten 36 und 37 des Lagerrings 22 formschlüssig gegen Verdrehen gesichert angeordnet sind. Die aus dem Gleitlagerwerkstoff PA46 PTFE15 bestehenden Gleitbeläge 32, 33 und 34 setzen sich jeweils aus neun kreisbogenförmigen Belagsegmenten zur Kreisform zusammen und sind endseitig mit radial bzw. axial vorspringenden Nasen 38, 39 und 40 versehen, die zwecks der Verdrehsicherung in innenumfangsseitigen bzw. stirnseitigen Ausnehmungen 41, 42 und 43 im Lagerring 22 eingesetzt sind.

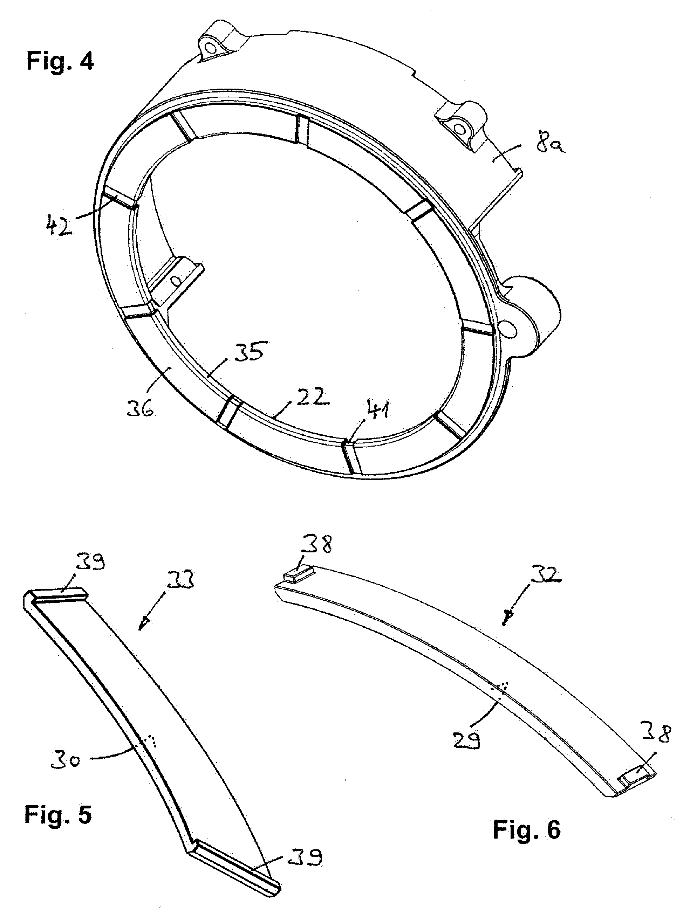

Das in Figur 5 dargestellte Belagsegment 33 bildet die eine axiale Gleitlagerfläche 30 des Spannergehäuses 8, die auf der dem Maschinengehäuse 3 zugewandten Stirnseite 36 (Rückseite des Spannergehäuseteils 8a gemäß Figur 4) des Lagerrings 22 verläuft und unmittelbar auf der axialen Gleitlagerfläche 25 des Maschinengehäuses 3 gleitet.

Das in Figur 6 dargestellte Belagsegment 32 bildet die radiale Gleitlagerfläche 29 des Spannergehäuses 8, die auf dem Innenmantel 35 des Lagerrings 22 verläuft und auf dem Außenmantel 24 des Maschinengehäuses 3 gleitet (s. Figur 3).

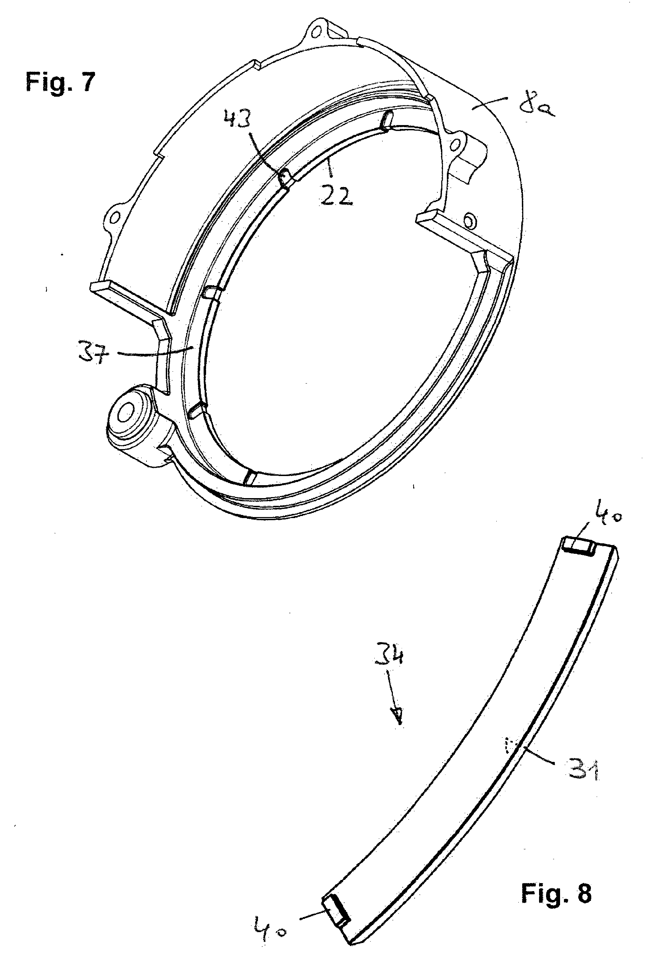

Das in Figur 8 dargestellte Belagsegment 34 bildet die andere axiale Gleitlagerfläche 31 des Spannergehäuses 8, die auf der dem Maschinengehäuse 3 abgewandten Stirnseite 37 (Frontseite des Spannergehäuseteils 8a gemäß Figur 7) des Lagerrings 22 verläuft und auf der axialen Gleitlagerfläche 26 der Lagerscheibe 27 gleitet.

Ein durch das oben erwähnte Kippmoment erzwungene Verkippen der Gleitlagerung im Rahmen des durch Bauteiltoleranzen bedingten Axiallagerspiels wird dadurch minimiert, dass sowohl die Belagsegmente 33 als auch die Belagsegmente 34 untereinander verschiedene, d.h. über den Umfang der Gleitlagerung veränderliche Wandstärken haben. Dabei sind die "dicken" Belagsegmente an derjenigen Position des Lagerrings 22 angeordnet, wo sie die größten Querkräfte abstützen, während umgekehrt die "dünnen" Belagsegmente dort angeordnet sind, wo sie die kleinsten oder gar keine Querkräfte abstützen.

### Liste der Bezugszahlen

- 1: Elektromaschine / Startergenerator
- 2: Spannvorrichtung
- 3: Maschinengehäuse
- 4: Achse des Antriebsrads
- 5: Antriebsrad
- 6: bewegliche Spannrolle
- 7: ortsfeste Spannrolle
- 8: Spannergehäuse
- 9: Achsschraube der beweglichen Spannrolle
- 10: Spannarm
- 11: Federmittel /Bodenfeder
- 12: Zapfen
- 13: Achsschraube der ortsfesten Spannrolle
- 14: Verschraubung des Spannergehäuses
- 15: Aufnahmeraum
- 16: Gleitlagerschale des Spannarms
- 17: Gleitlagerschale der Bogenfeder
- 18: Dichtleiste
- 19: Gehäusebohrung für Sicherungsstift
- 20: Spannarmbohrung für Sicherungsstift
- 21: Sicherungsstift
- 22: Lagerring
- 23: Kanal
- 24: radiale Gleitlagerfläche des Maschinengehäuses
- 25: axiale Gleitlagerfläche des Maschinengehäuses
- 26: axiale Gleitlagerfläche des Maschinengehäuses
- 27: Lagerscheibe
- 28: Schraubverbindung der Lagerscheibe
- 29: radiale Gleitlagerfläche des Spannergehäuses
- 30: axiale Gleitlagerfläche des Spannergehäuses
- 31: axiale Gleitlagerfläche des Spannergehäuses
- 32: radialer Gleitbelag / Belagsegment
- 33: axialer Gleitbelag / Belagsegment
- 34: axialer Gleitbelag / Belagsegment
- 35: Innenmantel des Lagerrings
- 36: Stirnseite des Lagerrings
- 37: Stirnseite des Lagerrings
- 38: Nase des radialen Gleitbelags
- 39: Nase des axialen Gleitbelags
- 40: Nase des axialen Gleitbelags
- 41: Ausnehmung für radialen Gleitbelag
- 42: Ausnehmung für axialen Gleitbelag
- 43: Ausnehmung für axialen Gleitbelag

## Patentansprüche

1. Spannvorrichtung für einen Riementrieb, der einen endlos umlaufenden Riemen, eine Elektromaschine (1) mit einem Maschinengehäuse (3, 3') und einem Antriebsrad (5) und zumindest ein weiteres Triebrad aufweist, das über den Riemen mit dem Antriebsrad (5) in Antriebsverbindung steht, wobei die Spannvorrichtung (2) folgendes umfasst:
- ein Spannergehäuse (8, 8a, 8b), das mittels einer Gleitlagerung um die Achse (4) des Antriebsrads (5) verschwenkbar auf dem Maschinengehäuse (3, 3') gelagert ist,
- zwei Spannrollen (6, 7), die den Riemen in dessen Umlaufrichtung vor und hinter dem Antriebsrad (5) mit Vorspannkraft beaufschlagen,
- ein die Vorspannkraft erzeugendes Federmittel (11)
- und einen gegen die Kraft des Federmittels (11) beweglich im Spannergehäuse (8, 8a, 8b) gelagerten Spannarm (10),
wobei eine der Spannrollen (6) auf dem Spannarm (10) gelagert ist und die andere Spannrolle (7) ortsfest auf dem Spannergehäuse (8, 8a, 8b) gelagert ist, **dadurch gekennzeichnet, dass** das Spannergehäuse (8, 8a, 8b) mit einer radialen Gleitlagerfläche (29) in radialer Richtung und mit axialen Gleitlagerflächen (30, 31) in beidseitig axialer Richtung auf dazu korrespondierenden Gleitlagerflächen (24, 25, 26) des Maschinengehäuses (3, 3') gelagert ist.

2. Spannvorrichtung nach Anspruch 1, **dadurch gekennzeichnet, dass** das Spannergehäuse (8, 8a, 8b) mit einem Lagerring (22) versehen ist, auf dessen Innenmantel (35) und auf dessen Stirnseiten (36, 37) die radiale bzw. die axialen Gleitlagerflächen (29 bzw. 30, 31) des Spannergehäuses (8, 8a, 8b) verlaufen.

3. Spannvorrichtung nach Anspruch 2, **dadurch gekennzeichnet, dass** die radiale und die axialen Gleitlagerflächen (29, 30, 31) des Spannergehäuses (8, 8a, 8b) durch Gleitbeläge (32, 33, 34) gebildet sind, die am Innenmantel (35) bzw. auf den Stirnseiten (36, 37) des Lagerrings (22) gegen Verdrehen gesichert angeordnet sind.

4. Spannvorrichtung nach Anspruch 3, **dadurch gekennzeichnet, dass** die Gleitbeläge (32, 33, 34) jeweils aus kreisbogenförmigen Belagsegmenten zusammengesetzt sind.

5. Spannvorrichtung nach Anspruch 4, **dadurch gekennzeichnet, dass** die Belagsegmente (32, 33, 34) mit Vorsprüngen (38, 39, 40) versehen sind, die zwecks formschlüssig wirkender Verdrehsicherung in innenumfangsseitigen bzw. stirnseitigen Ausnehmungen (41, 42, 43) im Lagerring (22) eingesetzt sind.

6. Elektromaschine mit einer darauf gelagerten Spannvorrichtung (2) nach Anspruch 2, **dadurch gekennzeichnet, dass** die Gleitlagerflächen (24, 25, 26) des Maschinengehäuses (3, 3') einen in dessen Umfangsrichtung verlaufenden Kanal (23) bilden, der einen im wesentlichen U-förmigen, radial auswärts geöffneten Querschnitt aufweist und in den sich der Lagerring (22) radial einwärts erstreckt.

7. Elektromaschine nach Anspruch 6, **dadurch gekennzeichnet, dass** eine der axialen Gleitlagerflächen (25) des Maschinengehäuses (3, 3') unmittelbar auf dem Maschinengehäuse (3, 3') ausgebildet ist und dessen andere axiale Gleitlagerfläche (26) auf einer mit dem Maschinengehäuse (3, 3') verschraubten Lagerscheibe (27) ausgebildet ist, die auf der dem Maschinengehäuse (3, 3') abgewandten Stirnseite (37) des Lagerrings (22) angeordnet ist.

8. Elektromaschine nach Anspruch 7, **dadurch gekennzeichnet, dass** die Gleitlagerung und die Lagerscheibe (27) radial vollständig außerhalb des Antriebsrads (5) verlaufen.

9. Elektromaschine nach Anspruch 6, **dadurch gekennzeichnet, dass** die ortsfest auf dem Spannergehäuse (8, 8a, 8b) gelagerte Spannrolle (7) in Umlaufrichtung des Riemens vor dem Antriebsrad (5) angeordnet ist.

## Claims

1. Tensioning device for a belt drive which has an endlessly revolving belt, has an electric machine (1) with a machine housing (3, 3') and with a driving wheel (5) and has at least one further drive wheel which is drive-connected to the driving wheel (5) via the belt, the tensioning device (2) comprising the following:
- a tensioner housing (8, 8a, 8b) which is mounted on the machine housing (3, 3') pivotably about the axis (4) of the driving wheel (5) by means of a plain bearing mounting,
- two tensioning pulleys (6, 7) which act with pretensioning force upon the belt in its direction of rotation in front of and behind the driving wheel (5),
- a spring means (11) generating the pretensioning force,
- and a tensioning arm (10) mounted in the tensioner housing (8, 8a, 8b) movably counter to the force of the spring means (11),
one of the tensioning pulleys (6) being mounted on the tensioning arm (10) and the other tensioning pulley (7) being mounted fixedly on the tensioner housing (8, 8a, 8b), **characterized in that** the tensioner housing (8, 8a, 8b) is mounted in the radial direction by means of a radial plain bearing surface (29) and, on both sides, in the axial direction by means of axial plain bearing surfaces (30, 31) on corresponding matching plain bearing surfaces (24, 25, 26) of the machine housing (3, 3').

2. Tensioning device according to Claim 1, **characterized in that** the tensioner housing (8, 8a, 8b) is provided with a bearing ring (22), on the inner surface area (35) of which and along the end faces (36, 37) of which run respectively the radial and the axial plain bearing surfaces (29 and 30, 31) of the tensioner housing (8, 8a, 8b).

3. Tensioning device according to Claim 2, **characterized in that** the radial and axial plain bearing surfaces (29, 30, 31) of the tensioner housing (8, 8a, 8b) are formed by sliding linings (32, 33, 24) which are arranged, secured against twisting, on the inner surface area (35) and on the end faces (36, 37) of the bearing ring (22).

4. Tensioning device according to Claim 3, **characterized in that** the sliding linings (32, 33, 34) are composed in each case of lining segments which are in the form of an arc of a circle.

5. Tensioning device according to Claim 4, **characterized in that** the lining segments (32, 33, 34) are provided with projections (38, 39, 40) which, for the purpose of positively acting securing against twisting, are inserted in inner-circumferential or endface recesses (41, 42, 43) in the bearing ring (22).

6. Electric machine having a tensioning device (2) according to Claim 2 which is mounted thereon, **characterized in that** the plain bearing surfaces (24, 25, 26) of the machine housing (3, 3') form a channel (23) which runs in the circumferential direction of the latter and has an essentially U-shaped, radially outwardly opened cross section and into which the bearing ring (22) extends radially inwards.

7. Electric machine according to Claim 6, **characterized in that** one of the axial plain bearing surfaces (25) of the machine housing (3, 3') is formed directly on the machine housing (3, 3') and its other axial plain bearing surface (26) is formed on a bearing disc (27) which is screwed to the machine housing (3, 3') and which is arranged on that end face (37) of the bearing ring (22) which faces away from the machine housing (3, 3').

8. Electric machine according to Claim 7, **characterized in that** the plain bearing mounting and the bearing disc (27) run completely outside the driving wheel (5) radially.

9. Electric machine according to Claim 6, **characterized in that** the tensioning pulley (7) mounted fixedly on the tensioner housing (8, 8a, 8b) is arranged in front of the driving wheel (5) in the direction of rotation of the belt.

## Revendications

1. Dispositif de serrage pour entraînement à courroie qui présente une courroie en boucle fermée, une machine électrique (1) dotée d'un boîtier (3, 3') de machine et une roue d'entraînement (5) ainsi qu'au moins une autre roue entraînée reliée à entraînement à la roue d'entraînement (5) par l'intermédiaire de la courroie, le dispositif de serrage (2) présentant :
un boîtier (8, 8a, 8b) de tendeur monté à pivotement sur le boîtier (3, 3') de machine au moyen d'un palier coulissant autour de l'axe (4) de la roue d'entraînement (5),
deux galets de serrage (6, 7) qui appliquent une force de précontrainte sur la courroie, en amont et en aval de la roue d'entraînement (5) dans le sens de son déplacement en boucle,
un moyen élastique (11) qui exerce la force de précontrainte et
un bras de serrage (10) monté à déplacement dans le boîtier (8, 8a, 8b) de tendeur en opposition à la force du moyen élastique (11),
l'un des galets de serrage (6) étant monté sur le bras de serrage (10) et l'autre galet de serrage (7) étant monté en position immobile sur le boîtier (8, 8a, 8b) de tendeur,
**caractérisé en ce que**
le boîtier (8, 8a, 8b) de tendeur est monté dans la direction radiale à l'aide d'une surface radiale (29) de palier coulissant et dans les deux sens de la direction axiale par des surfaces axiales (30, 31) de palier coulissant, sur des surfaces correspondantes (24, 25, 26) de palier coulissant du boîtier (3, 3') de machine.

2. Dispositif de serrage selon la revendication 1, **caractérisé en ce que** le boîtier (8, 8a, 8b) de tendeur est doté d'une bague de palier (22) sur l'enveloppe intérieure (35) de laquelle et sur les côtés frontaux (36, 37) de laquelle s'étendent les surfaces radiales ou les surfaces axiales (29 ou 30, 31) de palier coulissant du boîtier (8, 8a, 8b) de tendeur.

3. Dispositif de serrage selon la revendication 2, **caractérisé en ce que** les surfaces radiales et les surfaces axiales (29, 30, 31) de palier coulissant du boîtier (8, 8a, 8b) de tendeur sont formées par des garnitures de coulissement (32, 33, 34) disposées sur l'enveloppe intérieure (35) ou sur les côtés frontaux (36, 37) de la bague de palier (22) en étant empêchées de tourner.

4. Dispositif de serrage selon la revendication 3, **caractérisé en ce que** les garnitures de coulissement (32, 33, 34) sont chacune constituée de segments de garnitures en forme d'arc de cercle.

5. Dispositif de serrage selon la revendication 4, **caractérisé en ce que** les segments de garniture (32, 33, 34) sont dotés de saillies (38, 39, 40) qui sont insérées de manière à obtenir un blocage de rotation agissant par correspondance géométrique, dans des découpes (41, 42, 43) situées sur la périphérie intérieure ou sur les côtés frontaux de la bague de palier (22).

6. Machine électrique sur laquelle est monté un dispositif de serrage (2) selon la revendication 2, **caractérisée en ce que** les surfaces (24, 25, 26) de palier coulissant du boîtier (3, 3') de machine forment un canal (23) qui s'étend dans sa direction périphérique, qui présente une section transversale essentiellement en forme de U ouverte radialement du côté extérieur et dans lequel la bague de palier (22) s'étend radialement vers l'intérieur.

7. Machine électrique selon la revendication 6, **caractérisée en ce que** l'une (25) des surfaces axiales de palier coulissant du boîtier (3, 3') de machine est formée directement sur le boîtier (3, 3') de machine, son autre surface axiale (26) de palier coulissant étant formée sur un disque de montage (27) vissé sur le boîtier (3, 3') de machine et disposé sur le côté frontal (37) de la bague de palier (22) non tournée vers le boîtier (3, 3') de machine.

8. Machine électrique selon la revendication 7, **caractérisée en ce que** le montage coulissant et le disque de montage (27) s'étendent complètement à l'extérieur de la roue d'entraînement (5) dans la direction radiale.

9. Machine électrique selon la revendication 6, **caractérisée en ce que** le galet de serrage (7) monté en position immobile sur le boîtier (8, 8a, 8b) de tendeur est disposé en amont de la roue d'entraînement (5) dans le sens de déplacement de la courroie.
